# EUROPEAN PATENT APPLICATION

(11) **EP 2 921 993 A1**
(43) Date of publication of application: **23.09.2015**
(21) Application number: 14460017.8
(22) Date of filing: 18.03.2014
(51) Int. Cl.: G06K 9/62

(54) **Computer-implemented system and method for marking objects on an image**

(71) Applicant: Lab4motion Solutions Spolka z ograniczona odpowiedzialnoscia, 61-842 Poznan (PL)
(72) Inventor: Graj, Milosz, 64-730 Wielen (PL); Ludwiczuk, Bartek, 61-131 Poznan (PL)
(74) Representative: Pankowski, Jacek

(57) **Abstract**

A computer-implemented method for marking objects on an image, the method comprising the steps of: obtaining a representation of the image to be analyzed (101); executing object recognition on the representation of the image to be analyzed (101). The method further comprises the steps of: obtaining representation of at least one partial model image (102) to be identified on the analyzed image (101); attempting to recognize the partial model image (102) on the input image (101); and in case the partial model image (102) has been recognized on the input image (101), obtaining a contour (103) of an object associated with that partial model image (102) and marking a portion of the analyzed image (101) as corresponding to that object.

## Description

### FIELD OF INVENTION

The present invention relates to marking objects on a stationary or motion image, which is particularly applicable to detecting planograms.

### BACKGROUND

A planogram is a diagram that indicates the placement of retail products on shelves, which dictates a retail store's layout. The planogram is therefore known to the store operator. However, third parties may be also interested to learn about a planogram at a given store, to extract the planogram on the basis of the real placement of the products on shelves.

Planogram extracting can be done manually by observing the shelves and drawing the planogram by hand, which is a time-consuming task. Attempts have been made to extract planograms from photographs (images) of shelves, in order to automatically identify positioning of objects on the image and create a planogram corresponding to the image.

A PCT application WO2009027839 relates to planogram extraction based on image processing, wherein image analysis techniques, including object recognition analysis, are applied to images obtained by one or more image capture devices deployed within inventory environments. The object recognition analysis provides object recognition data (that may include one or more recognized product instances) based on stored product (training) images. The images to be recognized comprise appearance of a whole product, which is a time-consuming and power-processing task.

A US patent application US20140003729 presents a method for automatically constructing a planogram from photographs of shelving, wherein a product detection step enhances traditional image recognition techniques, using artificial learning techniques to incorporate characteristics specific to the planograms. The product detection step includes at least two successive classification steps, namely: an initialization step with detection of product categories; and a classification step with the classification of the products themselves, each of these steps including a first image recognition step, followed by a statistical filtering step based on the characteristics specific to the planograms.

A US patent US6590521 presents a system that recognizes the outline of an object based on the edges judged to belong to the object. Such solution requires additional processing power, memory or time in order to complete.

Detection of objects on images in order to construct planograms is only an exemplary application of object identification on images. The present invention is therefore not limited to constructing planograms, but relates in general to object detection (object recognition), while construction of planograms is presented only as an example application of the presented system and method.

One particular problem encountered when marking objects on the image is associated with objects that are transparent, such as bottles with water. Such objects are hard to detect, as they do not easily distinguish from the background and lighting conditions heavily impact their appearance. Moreover, when a plurality of such objects appear next to each other, it is hard to detect boundaries between individual objects.

It would be advantageous to further improve the known object marking systems and methods, and in particular to further improve the known methods for creating a planogram based on an image.

### SUMMARY

There is presented a computer-implemented method for marking objects on an image, the method comprising the steps of obtaining a representation of the image to be analyzed and executing object recognition on the representation of the image to be analyzed. the method further comprises the steps of: obtaining representation of at least one partial model image to be identified on the analyzed image; attempting to recognize the partial model image on the input image; and in case the partial model image has been recognised on the input image, obtaining a contour of an object associated with that partial model image and marking a portion of the analyzed image as corresponding to that object.

Preferably, the method further comprises obtaining an algorithm corresponding to the particular model image to be recognized and recognizing that particular model image based on that algorithm.

Preferably, the partial model image comprises a plurality of images at distinct spatial locations.

Preferably, the analyzed image with marked portions corresponding to recognized partial model images is output as a planogram.

Preferably, the method further comprises determining an accuracy score corresponding to the accuracy with which the partial model image has been recognized on the image to be analyzed.

Preferably, in case the accuracy score is below a predetermined threshold, marking the portion of the analyzed image as potentially corresponding to the particular object.

Preferably, in case the accuracy score is above a predetermined threshold, excluding the marked portion of the analyzed image from further analysis for other partial model images.

There is also presented a computer program comprising program code means for performing all the steps of the computer-implemented method according to the present invention when said program is run on a computer, as well as a computer readable medium storing computer-executable instructions performing all the steps of the computer-implemented method according to the present invention when executed on a computer.

There is further presented a computer-implemented system for marking objects on an image, the system comprising: a computing server and a database, communicatively connected with the computing server, the database comprising: a representation of an image to be analyzed; at least one representation of a partial model image to be recognized on the analyzed image; and at least one representation of image contours associated with the at least one partial model image. The computing server is configured to: obtain from a representation of the image to be analyzed; obtain a representation of at least one model image to be identified on the analyzed image; attempt to recognize a partial model image on the input image; and in case the particular partial model image has been recognised on the input image, a contour of object associated with that partial model image and mark a portion of the analyzed image as corresponding to that object.

Preferably, the database further comprises at least one algorithm for marking objects associated with a particular partial model image; and wherein the computing server is further configured to recognize a particular partial model image on the input image using the algorithm associated with that partial model image.

### BRIEF DESCRIPTION OF DRAWINGS

Further details and features of the present invention, its nature and various advantages will become more apparent from the following detailed description of the preferred embodiments shown in a drawing, in which:
Fig. 1A shows an example of an analyzed image of a store shelf;
Fig. 1B shows a corresponding planogram;
Figs. 2A, 2B and 2C show exemplary partial model images and object contours;
Fig. 3 shows a system for marking objects on an image;
Fig. 4 shows a procedure for marking objects on analyzed image.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

### DESCRIPTION OF EMBODIMENTS

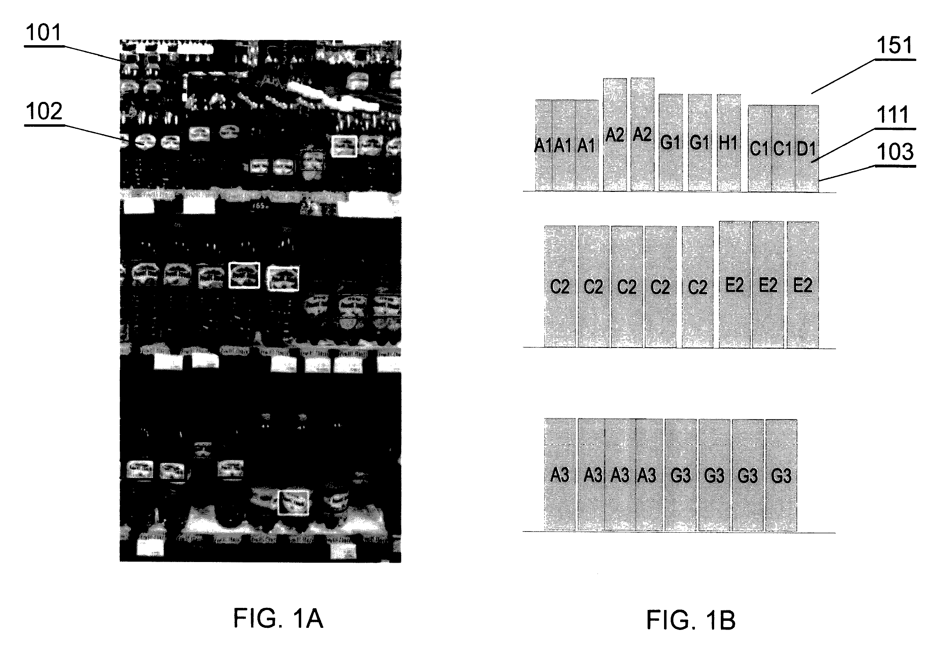

Fig. 1A shows an example of an image 101 of a store shelf to be analyzed, wherein various transparent or semi-transparent or partially transparent bottles are positioned.
Fig. 1B shows a corresponding planogram 151, which defines areas 111 of the analyzed image 101 occupied by contours 103 of the recognized objects corresponding to partial model images 102.

A partial model image 102 is defined with reference to an image of an object to be recognized. In other words a contour of an object covers a greater area on the analyzed image 101 than the partial model image 102 associated with said contour. For example, while the object is a bottle comprising a label, only the label constitutes the partial model image 102. In other words the area of the partial model image 102 is a subset of the area of the corresponding contour 103 on the image 101. A partial image 102 can also be constructed as the whole image of an object to be recognized but with additional masking of regions that are not to be processed by object recognition, leaving just the crucial part of the image of an object to be recognized.

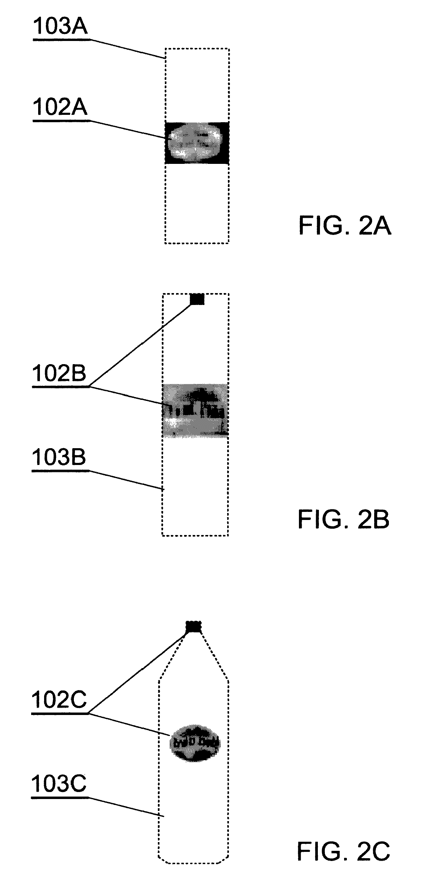

Fig. 2A shows one example of a partial model image 102A and a corresponding object contour 103A. The contour 103A has a rectangular shape and can be defined by coordinates of one of its corners with respect to the partial model image 102A, a width and a height. In the present example, the partial model image 102A may correspond to a label of a clear water bottle, and the contour 103A may define the width and height dimensions of the bottle.

Fig. 2B shows another example of a partial model image 102B and a corresponding object contour 103B. The contour 103B has a rectangular shape similarly to that of contour 103A. The partial model image 102B comprises two parts at distinct spatial locations, one corresponding a label of a clear water bottle, and the other corresponding to a cap of the bottle. This is particularly useful to distinguish different size objects of a similar shape, for example bottles of the same water having different sizes (the distance between the cap and the label may allow to determine the size).

Fig. 2C shows another example of a partial model image 102C and a corresponding object contour 103C. The contour 103C has a shape of a polygon and can be defined by lines or curves or a label with respect to the partial model image 102B. The partial model image 102C comprises two parts, one corresponding a label of a clear water bottle, which is non-rectangular and does not touch the borders of the contour, and the other corresponding to a cap of the bottle.

It is therefore possible for the partial model image 102 to comprise a plurality of parts at distinct spatial locations, defining the characteristic portions of the object to be recognized and associated with the contour.

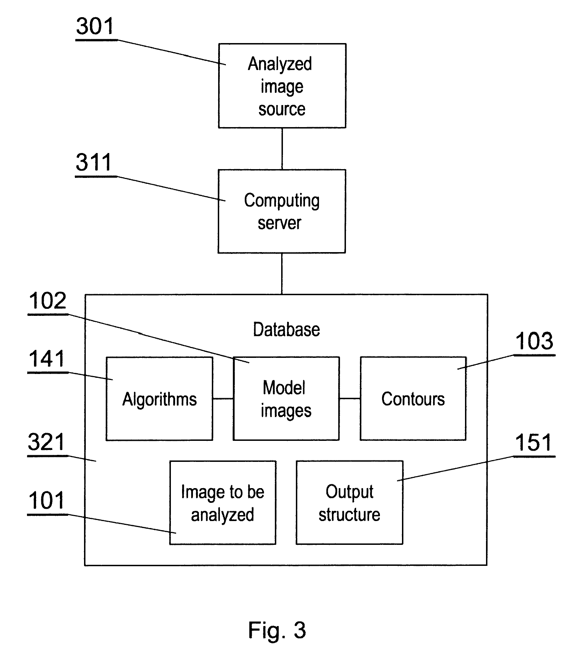

Fig. 3 shows a computer-implemented system for marking objects on an image. Elements of the system may be stand-alone computers or shared-resource servers, communicating with each other via wired or wireless interfaces. In one embodiment, the elements of the system may form a closed network of interconnections. In another embodiment, the elements of the system may be shared resources of a cloud computing network.

The system may be realized using dedicated components or custom made FPGA or ASIC circuits.

An image to be analyzed is provided from an image source 301, such as a photo camera, a video camera, electronic glasses or other wearable devices, an element of a surveillance system etc.

The image to be analyzed is input to a computing server 311. The computing server 311 is communicatively connected with a database 321 in which there are stored: a representation of the image to be analyzed 101, representations of partial model images 102 to be identified on the analyzed image 101, representations of image contours 103 associated with the partial model images 102, and algorithms 141 for marking objects.

Model images of particular type may have associated particular algorithms which are particularly effective for such image type, for example model images comprising a single image (such as 102A) may be have associated a different algorithm than model images comprising a plurality of images (such as 102B, 102C).

The representation for images 101, 102 can be a direct representation (such as a bitmap file) or a converted representation, e.g. most characteristic points, vectors or any other characteristic features.

The representations for partial model images 102 can define a plurality of images for the same object. For example, a single bottle can be photographed at different resolutions and/or viewing angles and/or perspectives and/or lighting conditions and a plurality of corresponding partial model images may be extracted from such photographs.

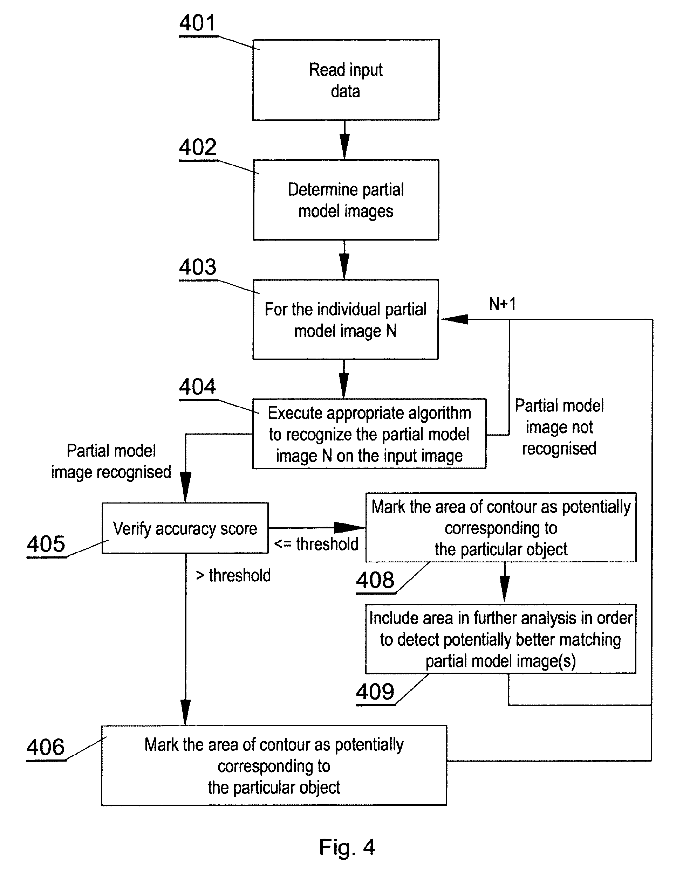

Fig. 4 shows a procedure for marking the objects on the analyzed image 101. First, in step 401, the input data are read by the computing server 311: the representation of the image to be analyzed 101, representation of the model images 102 to be identified on the analyzed image 101 and definition of algorithms to be used while detecting particular model images 102.

Next, in step 402, the procedure continues by detecting individual partial model images 102. For each 403 image 102, there is executed, in step 404, the appropriate algorithm to recognize the partial model image 102 on the input image 101.

If the partial model image 102 is recognized, then in step 406 the contour 103 of object associated with that partial model image 102 is obtained from the database and appropriate portion of the analyzed image 101 is marked as corresponding to that object.

The recognition algorithm may return a recognition accuracy 405 score which determines how certain the object recognition is. For objects detected with a high accuracy score (e.g. above a predefined threshold such as 80 on a scale from 0 to 100), the area corresponding to the contour may be excluded from further analysis for other objects and the procedure will proceed to step 406.

For objects detected with a low accuracy score (e.g. below the predefined threshold such as 80 on a scale from 0 to 100), the area may be marked as potentially corresponding to the particular object 408, but can be included in further analysis in order to detect potentially better matching partial model image(s) of other objects 409.

After the end of the analysis, the overlapping areas with low scores may be arranged depending on the score accuracy.

The output data structure 151 (i.e. preferably the planogram) is updated in step 406 by marking the area corresponding to the contour 103 associated with the recognized partial model image 102 and the procedure continues to analyze another model image, until all model images are analyzed or all areas of the image are detected.

The algorithms 141 may be configured to detect partial model images 102 on the analyzed image 101, even if their resolutions do not match, by appropriate scaling. Then, once an object is detected, a difference in scales may be calculated and the contour 103 may be scaled accordingly. For example, if the partial model image 102 has a resolution two times higher than the resolution of the analyzed image 101, then after detecting the partial model image 102 on the analyzed image 101 in step 404, the contour of the object corresponding to that partial model image 103 is decreased two times upon applying it over the analyzed image 101 in step 406.

It can be easily recognized, by one skilled in the art, that the aforementioned method for marking objects on a stationary or motion image may be performed and/or controlled by one or more computer programs. Such computer programs are typically executed by utilizing the computing resources in a computing device such as personal computers, personal digital assistants, cellular telephones, dedicated controllers or the like. Applications are stored on a non-transitory medium. An example of a non-transitory medium is a nonvolatile memory, for example a flash memory or volatile memory, for example RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A computer-implemented method for marking objects on an image, the method comprising the steps of:
- obtaining a representation of the image to be analyzed (101);
- executing object recognition on the representation of the image to be analyzed (101);
wherein the method further comprises the steps of:
- obtaining representation of at least one partial model image (102) to be identified on the analyzed image (101);
- attempting to recognize the partial model image (102) on the input image (101); and
- in case the partial model image (102) has been recognised on the input image (101), obtaining a contour (103) of an object associated with that partial model image (102) and marking a portion of the analyzed image (101) as corresponding to that object.

2. The method according to claim 1, further comprising obtaining an algorithm corresponding to the particular model image (102) to be recognized and recognizing that particular model image (102) based on that algorithm.

3. The method according to claim 1, wherein the partial model image (102) comprises a plurality of images at distinct spatial locations (102B, 102C).

4. The method according to claim 1, wherein the analyzed image with marked portions corresponding to recognized partial model images (102) is output as a planogram.

5. The method according to claim 1, further comprising determining an accuracy score corresponding to the accuracy with which the partial model image (102) has been recognized on the image to be analyzed (101).

6. The method according to claim 5, wherein in case the accuracy score is below a predetermined threshold, marking the portion of the analyzed image (101) as potentially corresponding to the particular object.

7. The method according to claim 5, wherein in case the accuracy score is above a predetermined threshold, excluding the marked portion of the analyzed image (101) from further analysis for other partial model images (102).

8. A computer program comprising program code means for performing all the steps of the computer-implemented method according to any of claims 1-7 when said program is run on a computer.

9. A computer readable medium storing computer-executable instructions performing all the steps of the computer-implemented method according to any of claims 1-7 when executed on a computer.

10. A computer-implemented system for marking objects on an image, the system comprising:
- a computing server (311);
- a database (321), communicatively connected with the computing server (311), the database (321) comprising:
- a representation of an image to be analyzed (101);
- at least one representation of a partial model image (102) to be recognized on the analyzed image (101); and
- at least one representation of image contours (103) associated with the at least one partial model image (102);
- wherein the computing server (311) is configured to:
- obtain from a representation of the image to be analyzed (101);
- obtain a representation of at least one model image (102) to be identified on the analyzed image (101);
- attempt to recognize a partial model image (102) on the input image (101); and
- in case the particular partial model image (102) has been recognised on the input image (101), a contour (103) of object associated with that partial model image (102) and mark a portion of the analyzed image (101) as corresponding to that object.

11. The system according to claim 10, wherein the database (321) further comprises at least one algorithm (141) for marking objects associated with a particular partial model image (102); and wherein the computing server (321) is further configured to recognize a particular partial model image (102) on the input image (101) using the algorithm (141) associated with that partial model image (102).
